(19) Europäisches Patentamt
European Patent Office
Office européen des brevets

(11) **EP 1 847 552 A1**

(12) **EUROPEAN PATENT APPLICATION**

(43) Date of publication:
**24.10.2007 Bulletin 2007/43**

(51) Int Cl.:
***C08F 4/6592*** *(2006.01)* ***C08F 10/00*** *(2006.01)*

(21) Application number: **06008015.7**

(22) Date of filing: **18.04.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(71) Applicant: **Borealis Technology Oy**
**06101 Porvoo (FI)**

(72) Inventors:
• **Ernst, Eberhard**
**4210 Unterweitersdorf (AT)**
• **Stadlbauer, Manfred**
**4040 Linz (AT)**

(74) Representative: **Kador & Partner**
**Corneliusstrasse 15**
**80469 München (DE)**

(54) **Catalytic system**

(57)     A catalyst system comprising an asymmetric catalyst, wherein the wherein the catalyst system has a porosity of less than 1.40 ml/g.

**EP 1 847 552 A1**

**Description**

The present invention relates to a new catalytic system comprising an asymmetric catalyst.

Catalyst systems which are solutions of one or more catalyst components (e. g. a transition metal compound and optionally a cocatalyst) are known in the filed as homogeneous catalyst systems. Homogeneous systems are used as liquids in the polymerisation process. Such systems have in general a satisfactory catalytic activity, but their problem has been that the polymer thus produced has a poor morphology (e. g. the end polymer is in a form of a fluff having a low bulk density). As a consequence, operation of slurry and gas phase reactors using a homogeneous catalyst system cause problems in practice as i. a. fouling of the reactor can occur.

The above problems have been tried to overcome in several ways: The homogeneous system has been prepolymerised with an olefin monomer before the actual polymerisation step. Said prepolymerisation, however, has not solved the problem of the formation of a polymer fluff. EP 426 646 of Fina has further suggested to use specific prepolymerisation conditions, i. e. the reaction temperature and the reaction time of a narrow, specific range, for improving the morphology of the polymer thus obtained.

In WO 98/37103 the homogeneous catalyst system is introduced as droplets of a certain size into the polymerisation reactor for controlling the average particle size of a polyolefin produced in gas phase polymerisation. Said droplets are formed just before the introduction by using an atomizer (e. g. a spray nozzle).

Furthermore, to overcome the problems of the homogeneous systems in a non-solution process the catalyst components have been supported, e. g. their solution impregnated, on porous organic or inorganic support material, e. g. silica.

These supported systems, known as heterogeneous catalyst systems, can additionally be prepolymerised in order to further immobilise and stabilise the catalyst components.

However, also supported and optionally prepolymerised systems present problems. It is difficult to get an even distribution of the catalyst components in the porous carrier material and leaching of the catalyst components from the support can occur. Such drawbacks lead to an unsatisfactory polymerisation behaviour of the catalyst, and as a result the morphology of the polymer product thus obtained is also poor. This is in particular true in case polypropylenes shall be produced, wherein the polypropylenes shall have a high melt strength and being suitable for many applications, such as for blow films, extrusion coating, foam extrusion and blow-molding. There are in particular difficulties to develop processes, especially catalyst systems, to manufacture a multi-branched polyproylene, i.e. not only the polypropylene backbone is furnished with a larger number of side chains (branched polypropylene) but also some of the side chains themselves are provided with further side chains..

Furthermore, the uneven distribution of the catalyst components in the support material can have an adverse influence on the fragmentation of the support material during the polymerisation step.

The support can also have an adverse effect on the activity of the catalyst, on its polymerisation behaviour and on the properties of the end polymer.

Accordingly, various measures have been proposed to improve the morphology properties of homogeneous catalyst systems.

However, due to the complexity of the catalyst systems, the need still exists to develop further catalyst systems and preparation methods thereof which overcome the problems of the prior art practice. There is in particular the need to develop catalyst systems which allow the manufacture of a multi-branched polypropylene, especially which allow the manufacture of a polypropylene having a low branching index g', such as of less than 1.00, and a high strain hardening factor (SHI@1s$^{-1}$), such as of at least 0.30, or a polypropylene characterized in that its strain hardening factor (SHI) increases with the increase of the deformation rate *(dε/dt).*

The finding of the present invention is to provide a catalytic system comprising an asymmetric catalyst.

Hence the present invention is related to a new catalyst system comprising an asymmetric catalyst, wherein the catalyst system has a porosity of less than 1.40 ml/g, more preferably less than 1.30 ml/g and most preferably less than 1.00 ml/g. The porosity has been measured according to DIN 66135 (N$_2$). In another preferred embodiment the porosity is below detection limit when determined with the method applied according to DIN 66135.

An asymmetric catalyst according to this invention is a catalyst comprising at least two organic ligands which differ in their chemical structure.

Due to the use of the new catalyst system with a very low porosity comprising an asymmetric catalyst the manufacture of the below defined multi-branched polypropylene is possible. Such a polypropylene is not obtainable with catalysts known in the art.

Furthermore it is preferred, that the catalyst system has a surface area of of lower than 25 m$^2$/g, yet more preferred lower than 20 m$^2$/g, still more preferred lower than 15 m$^2$/g, yet still lower than 10 m$^2$/g and most preferred lower than 5 m$^2$/g. The surface area according to this invention is measured according to ISO 9277 (N$_2$).

It is in particular preferred that the catalytic system according to this invention comprises an asymmetric catalyst, i.e. a catalyst as defined below, and has porosity not detectable when applying the method according to DIN 66135 and has a surface area measured according to ISO 9277 lower than 5 m$^2$/g.

Preferably, the asymmetric catalyst employed comprises an organo-metallic compound of a transition metal of group 3 to 10 or the periodic table (IUPAC) or of an actinide or lanthanide.

The asymmetric catalyst is more preferably of a transition metal compound of formula (I)

$$(L)_m R_n MX_q \qquad (I)$$

wherein

M is a transition metal of group 3 to 10 or the periodic table (IUPAC), or of an actinide or lantanide,

each X is independently a monovalent anionic ligand, such as σ-ligand,

each L is independently an organic ligand which coordinates to M,

R is a bridging group linking two ligands L,

m is 2 or 3,

n is 0 or 1,

q is 1,2 or 3,

m+q is equal to the valency of the metal, and

with the proviso that at least two ligands "L" are of different chemical structure.

Said asymmetric catalyst is preferably a single site catalyst (SSC).

In a more preferred definition, each "L" is independently

(a) a substituted or unsubstituted cycloalkyldiene, i.e. a cyclopentadiene, or a mono-, bi- or multifused derivative of a cycloalkyldiene, i.e. a cyclopentadiene, which optionally bear further substituents and/or one or more hetero ring atoms from a Group 13 to 16 of the Periodic Table (IUPAC); or

(b) an acyclic, $\eta^1$ - to $\eta^4$- or $\eta^6$-ligand composed of atoms from Groups 13 to 16 of the Periodic Table, and in which the open chain ligand may be fused with one or two, preferably two, aromatic or non-aromatic rings and/or bear further substituents; or (c) a cyclic σ-, $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems and containing carbon ring atoms and optionally one or more heteroatoms selected from Groups 15 and 16 of the Periodic Table.

The term "σ-ligand" is understood in the whole description in a known manner, i.e. a group bonded to the metal at one or more places via a sigma bond. A preferred monovalent anionic ligand is halogen, in particular chlorine (Cl).

In a preferred embodiment, the asymmetric catalyst is preferably of a transition metal compound of formula (I)

$$(L)_m R_n MX_q \qquad (I)$$

wherein

M is a transition metal of group 3 to 10 or the periodic table (IUPAC), or of an actinide or lantanide,

each X is independently a monovalent anionic ligand, such as σ-ligand,

each L is independently an organic ligand which coordinates to M, wherein the organic ligand is an unsaturated organic cyclic ligand, preferably a substituted or unsubstituted, cycloalkyldiene, i.e. a cyclopentadiene, or a mono-, bi- or multifused derivative of a cycloalkyldiene, i.e. a cyclopentadiene, which optionally bear further substituents and/or one or more hetero ring atoms from a Group 13 to 16 of the Periodic Table (IUPAC),

R is a bridging group linking two ligands L,

m is 2 or 3,

n is 0 or 1,

q is 1,2 or 3,

m+q is equal to the valency of the metal, and

with the proviso that at least two ligands "L" are of different chemical structure.

According to a preferred embodiment said asymmetric catalyst compound (I) is a group of compounds known as metallocenes. Said metallocenes bear at least one organic ligand, generally 1, 2 or 3, e.g. 1 or 2, which is η-bonded to the metal, e.g. a $\eta^{2-6}$-ligand, such as a $\eta^5$-ligand. Preferably, a metallocene is a Group 4 to 6 transition metal, more preferably zirconium, which contains at least one $\eta^5$-ligand.

Preferably the asymmetric catalyst compound has a formula (II):

$$(Cp)_m R_n MX_q \qquad (II)$$

wherein

M is Zr, Hf or Ti, preferably Zr
each X is independently a monovalent anionic ligand, such as σ-ligand,
each Cp is independently an unsaturated organic cyclic ligand which coordinates to M,
R is a bridging group linking two ligands L,
m is 2,
n is 0 or 1, more preferably 1,
q is 1,2 or 3, more preferably 2,
m+q is equal to the valency of the metal, and
at least one Cp-ligand, preferably both Cp-ligands, is(are) selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,
with the proviso in case both Cp-ligands are selected from the above stated group that both Cp-ligands must chemically differ from each other.

Preferably, the asymmetric catalyst is of formula (II) indicated above,
wherein
M is Zr
each X is Cl,
n is 1, and
q is 2.

Preferably both Cp-ligands have different residues to obtain an asymmetric structure.

Preferably, both Cp-ligands are selected from the group consisting of substituted cyclopenadienyl-ring, substituted indenyl-ring, substituted tetrahydroindenyl-ring, and substituted fluorenyl-ring wherein the Cp-ligands differ in the substituents bonded to the rings.

The optional one or more substituent(s) bonded to cyclopenadienyl, indenyl, tetrahydroindenyl, or fluorenyl may be independently selected from a group including halogen, hydrocarbyl (e.g. $C_1$-$C_{20}$-alkyl, $C_2$-$C_{20}$-alkenyl, $C_2$-$C_{20}$-alkynyl, $C_3$-$C_{12}$-cycloalkyl, $C_6$-$C_{20}$-aryl or $C_7$-$C_{20}$-arylalkyl), $C_3$-$C_{12}$-cycloalkyl which contains 1, 2, 3 or 4 heteroatom(s) in the ring moiety, $C_6$-$C_{20}$-heteroaryl, $C_1$-$C_{20}$-haloalkyl, -SiR"$_3$, -OSiR"$_3$, -SR", -PR"$_2$ and -NR"$_2$, wherein each R" is independently a hydrogen or hydrocarbyl, e.g. $C_1$-$C_{20}$-alkyl, $C_2$-$C_{20}$-alkenyl, $C_2$-$C_{20}$-alkynyl, $C_3$-$C_{12}$-cycloalkyl or $C_6$-$C_{20}$-aryl.

More preferably both Cp-ligands are indenyl moieties wherein each indenyl moiety bear one or two substituents as defined above. More preferably each Cp-ligand is an indenyl moiety bearing two substituents as defined above, with the proviso that the substituents are chosen in such are manner that both Cp-ligands are of different chemical structure, i.e both Cp-ligands differ at least in one substituent bonded to the indenyl moiety, in particular differ in the substituent bonded to the five member ring of the indenyl moiety.

Still more preferably both Cp are indenyl moieties wherein the indenyl moieties comprise at least at the five membered ring of the indenyl moiety, more preferably at 2-position, a substituent selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, with proviso that the indenyl moieties of both Cp must chemically differ from each other, i.e. the indenyl moieties of both Cp comprise different substituents.

Still more preferred both Cp are indenyl moieties wherein the indenyl moieties comprise at least at the six membered ring of the indenyl moiety, more preferably at 4-position, a substituent selected from the group consisting of a $C_6$-$C_{20}$ aromatic ring moiety, such as phenyl or naphthyl, preferably phenyl, which is optionally substituted with one or more substitutents, such as $C_1$-$C_6$ alkyl, and a heteroaromatic ring moiety, with proviso that the indenyl moieties of both Cp must chemically differ from each other, i.e. the indenyl moieties of both Cp comprise different substituents.

Yet more preferably both Cp are indenyl moieties wherein the indenyl moieties comprise at the five membered ring of the indenyl moiety, more preferably at 2-position, a substituent and at the six membered ring of the indenyl moiety, more preferably at 4-position, a further substituent, wherein the substituent of the five membered ring is selected from the group consisting of alkyl, such as $C_1$-$C_6$ alkyl, e.g. methyl, ethyl, isopropyl, and trialkyloxysiloxy, wherein each alkyl is independently selected from $C_1$-$C_6$ alkyl, such as methyl or ethyl, and the further substituent of the six membered ring is selected from the group consisting of a $C_6$-$C_{20}$ aromatic ring moiety, such as phenyl or naphthyl, preferably phenyl, which is optionally substituted with one or more substituents, such as $C_1$-$C_6$ alkyl, and a heteroaromatic ring moiety, with proviso that the indenyl moieties of both Cp must chemically differ from each other, i.e. the indenyl moieties of both Cp comprise different substituents. It is in particular preferred that both Cp are idenyl rings comprising two substituentes each and differ in the substituents bonded to the five membered ring of the idenyl rings.

Concerning the moiety "R" it is preferred that "R" has the formula (III)

$$-Y(R')_2- \qquad (III)$$

wherein

Y is C, Si or Ge, and

R' is $C_1$ to $C_{20}$ alkyl, $C_6$-$C_{12}$ aryl, or $C_7$-$C_{12}$ arylalkyl.

In case both Cp-ligands of the asymmetric catalyst as defined above, in particular case of two indenyl moieties, are linked with a bridge member R, the bridge member R is typically placed at 1-position. The bridge member R may contain one or more bridge atoms selected from e.g. C, Si and/or Ge, preferably from C and/or Si. One preferable bridge R is -Si(R')$_2$-, wherein R' is selected independently from one or more of e.g. $C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge -Si(R')$_2$- is preferably e.g. -Si($C_1$-$C_6$ alkyl)$_2$-, -Si(phenyl)$_2$- or - Si($C_1$-$C_6$ alkyl)(phenyl)-, such as -Si(Me)$_2$-.

In a preferred embodiment the asymmetric catalyst is defined by the formula (IV)

$$(CP)_2R_1ZrX_2 \qquad (IV)$$

wherein

each X is independently a monovalent anionic ligand, such as σ-ligand, in particular halogen

both Cp coordinate to M and are selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,

with the proviso that both Cp-ligands must chemically differ from each other, and

R is a bridging group linking two ligands L,

wherein R is defined by the formula (III)

$$-Y(R')_2- \qquad (III)$$

wherein

Y is C, Si or Ge, and

R' is $C_1$ to $C_{20}$ alkyl, $C_6$-$C_{12}$ aryl, or $C_7$-$C_{12}$ arylalkyl.

More preferably the asymmetric catalyst is defined by the formula (IV), wherein both Cp are selected from the group consisting of substituted cyclopenadienyl, substituted indenyl, substituted tetrahydroindenyl, and substituted fluorenyl.

Yet more preferably the asymmetric catalyst is defined by the formula (IV), wherein both Cp are selected from the group consisting of substituted cyclopenadienyl, substituted indenyl, substituted tetrahydroindenyl, and substituted fluorenyl with the proviso that both Cp-ligands differ in the substituents, i.e. the subtituents as defined above, bonded to cyclopenadienyl, indenyl, tetrahydroindenyl, or fluorenyl.

Still more preferably the asymmetric catalyst is defined by the formula (IV), wherein both Cp are indenyl and both indenyl differ in one substituent, i.e. in a substiuent as defined above bonded to the five member ring of indenyl.

It is in particular preferred that the asymmetric catalyst is a non-silica supported catalyst as defined above, in particular a metallocene catalyst as defined above.

In a preferred embodiment the asymmetric catalyst is dimethylsilyl [(2-methyl-(4'-tert.butyl)-4-phenyl-indenyl) (2-isopropyl-(4'-tert.butyl)-4-phenyl-indenyl)]zirkonium dichloride. More preferred said asymmetric catalyst is not silica supported.

The above described asymmetric catalyst components are prepared according to the methods described in WO 01/48034.

It is in particular preferred that the asymmetric catalyst system is obtained by the emulsion solidification technology as described in WO 03/051934. This document is herewith included in its entirety by reference. Hence the asymmetric catalyst is preferably in the form of solid catalyst particles, obtainable by a process comprising the steps of

a) preparing a solution of one or more asymmetric catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the immiscible solvent comprises a fluorinated organic solvent and/or a functionalized derivative thereof, still more preferably the immiscible solvent comprises a semi-, highly- or perfluorinated hydrocarbon and/or a functionalized derivative thereof. It is in particular preferred, that said immiscible solvent comprises a perfluorohydrocarbon or a functionalized derivative thereof, preferably $C_3$-$C_{30}$ perfluoroalkanes, -alkenes or -cycloalkanes, more preferred $C_4$-$C_{10}$ perfluoro-alkanes, -alkenes or - cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 ˚C/min, preferably 0.5 to 6 ˚C/min and more preferably 1 to 5 ˚C/min. Even more preferred the emulsion is subjected to a temperature change of more than 40 ˚C, preferably more than 50 ˚C within less than 10 seconds, preferably less than 6 seconds.

The recovered particles have preferably an average size range of 5 to 200 μm, more preferably 10 to 100 μm.

Moreover, the form of solidified particles have preferably a spherical shape, a predetermined particles size distribution and a surface area as mentioned above of preferably less than 25 $m^2$/g, still more preferably less than 20 $m^2$/g, yet more preferably less than 15 $m^2$/g, yet still more preferably less than 10 $m^2$/g and most preferably less than 5 $m^2$/g, wherein said particles are obtained by the process as described above.

For further details, embodiments and examples of the continuous and dispersed phase system, emulsion formation method, emulsifying agent and solidification methods reference is made e.g. to the above cited international patent application WO 03/051934.

As mentioned above the catalyst system may further comprise an activator as a cocatalyst, as described in WO 03/051934, which is enclosed hereby with reference.

Preferred as cocatalysts for metallocenes and non-metallocenes, if desired, are the aluminoxanes, in particular the $C_1$-$C_{10}$-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO 94/28034 which is incorporated herein by reference. These are linear or cyclic oligomers of having up to 40, preferably 3 to 20, -(Al(R''')O)- repeat units (wherein R''' is hydrogen, $C_1$-$C_{10}$-alkyl (preferably methyl) or $C_6$-$C_{18}$-aryl or mixtures thereof).

The use and amounts of the such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

Furthermore, the present invention is related to the use of the above-defined catalyst system for the manufacture of polymers, in particular of polypropylenes. Still more preferred the above-defined catalyst system is used for the manufacture of the below defined polypropylene.

Hence, the present invention is related, in a first embodiment, to a polypropylene having

a. a branching index g' of less than 1.00 and

b. a strain hardening index (SHI@1s$^{-1}$) of at least 0.30 measured by a deformation rate $d\varepsilon/dt$ of 1.00 s$^{-1}$ at a temperature of 180 ˚C, wherein the strain hardening index (SHI) is defined as the slope of the logarithm to the basis 10 of the tensile stress growth function (lg ($\eta E^+$)) *as* function of the logarithm to the basis 10 of the Hencky strain (lg ($\varepsilon$)) in the range of Hencky strains between 1 and 3.

Surprisingly, it has been found that polypropylenes with such characteristics have superior properties compared to the polypropylenes known in the art. Especially, the melt of the polypropylenes in the extrusion process has a high stability.

The new polypropylenes are characterized in particular by extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as long-chain branching, and as such can be far more descriptive with regard to polymer characterization than other types of bulk rheological measurement which apply shear flow.

The first requirement according to the present invention is that the branching index g' shall be less than 1.00, more preferably less than 0.90, still more preferably less than 0.80. In the preferred embodiment, the branching index g' shall be less than 0.75. The branching index g' defines the degree of branching and correlates with the amount of branches of a polymer. The branching index g' is defined as g'=[IV]$_{br}$/[IV]$_{lin}$ in which g' is the branching index, [IV]$_{br}$ is the intrinsic viscosity of the branched polypropylene and [IV]$_{lin}$ is the intrinsic viscosity of the linear polypropylene having the same weight average molecular weight (within a range of $\pm$10%) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.

The intrinsic viscosity needed for determining the branching index g' is measured according to DIN ISO 1628/1, October 1999 (in Decalin at 135 ˚C).

A further requirement is that the strain hardening index (SHI@1s$^{-1}$) shall be at least 0.30, more preferred of at least 0.40, still more preferred of at least 0.50. In a preferred embodiment the strain hardening index (SHI@1s$^{-1}$) is at least 0.55.

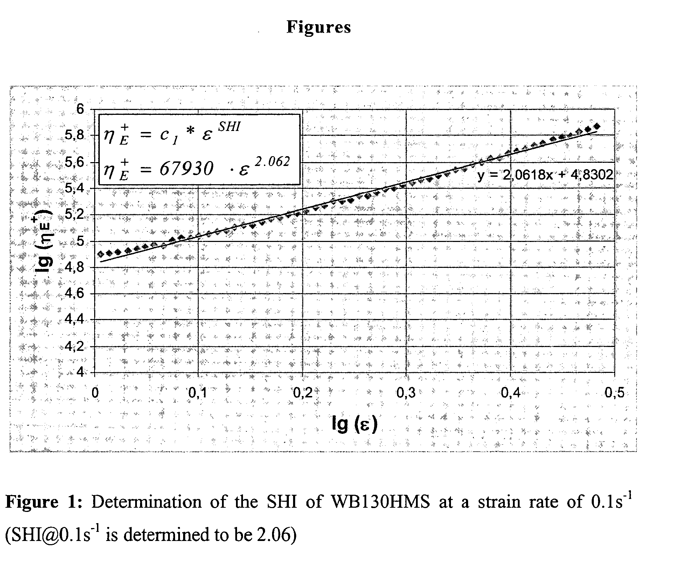

The strain hardening index is a measure for the strain hardening behavior of the polypropylene melt. In the present invention, the strain hardening index (SHI@1s$^{-1}$) has been measured by a deformation rate $d\varepsilon/dt$ of 1.00 s$^{-1}$ at a temperature of 180 ˚C for determining the strain hardening behavior, wherein the strain hardening index (SHI) is defined as the slope of the tensile stress growth function $\eta_E^+$ as a function of the Hencky strain $\varepsilon$ on a logarithmic scale between 1.00 and 3.00 (see figure 1). Thereby the Hencky strain $\varepsilon$ is defined by the formula $\dot{\varepsilon} = \dot{\varepsilon}_H \cdot t,$ wherein the Hencky strain rate $\dot{\varepsilon}_H$ is defined by the formula

$$\dot{\varepsilon}_H = \frac{2 \cdot \Omega \cdot R}{L_0} \ [s^{-1}]$$

with
"L$_0$" is the fixed, unsupported length of the specimen sample being stretched which is equal to the centerline distance between the master and slave drums "R" is the radius of the equi-dimensional windup drums, and "$\Omega$" is a constant drive shaft rotation rate.

In turn the tensile stress growth function $\eta_E^+$ is defined by the formula

$$\eta_E^+(\varepsilon) = \frac{F(\varepsilon)}{\dot{\varepsilon}_H \cdot A(\varepsilon)}$$

with

$$T(\varepsilon) = 2 \cdot R \cdot F(\varepsilon)$$

and

$$A(\varepsilon) = A_0 \cdot \left( \frac{d_S}{d_M} \right)^{2/3} \cdot \exp(-\varepsilon)$$

wherein

the Hencky strain rate $\dot{\varepsilon}_H$ is defined as for the Hencky strain $\varepsilon$

"F" is the tangential stretching force

"R" is the radius of the equi-dimensional windup drums

"T" is the measured torque signal, related to the tangential stretching force "F"

"A" is the instantaneous cross-sectional area of a stretched molten specimen

"$A_0$" is the cross-sectional area of the specimen in the solid state (i.e. prior to melting),

"$d_S$" is the solid state density and

"$d_M$" the melt density of the polymer.

In addition, it is preferred that the polypropylene shows strain rate thickening which means that the strain hardening increases with extension rates. Similarly to the measurement of SHI@ls$^{-1}$, a strain hardening index (SHI) can be determined at different strain rates. A strain hardening index (SHI) is defined as the slope of the logarithm to the basis 10 of the tensile stress growth function $\eta_E^+$, lg($\eta_E^+$), as function of the logarithm to the basis 10 of the Hencky strain $\varepsilon$, lg($\varepsilon$), between Hencky strains 1.00 and 3.00 at a at a temperature of 180 °C, where a SHI@0.1 s$^{-1}$ is determined with a deformation rate $\dot{\varepsilon}_H$ of 0.10 s$^{-1}$, a SHI@0.3 s$^{-1}$ is determined with a deformation rate $\dot{\varepsilon}_H$ of 0.30 s$^{-1}$, a SHI@3 s$^{-1}$ is determined with a deformation rate $\dot{\varepsilon}_H$ of 3.00 s$^{-1}$, and a SHI@10 s$^{-1}$ is determined with a deformation rate $\dot{\varepsilon}_H$ of 10.0 s$^{-1}$. In comparing the strain hardening index (SHI) at those five strain rates $\dot{\varepsilon}_H$ of 0.10, 0.30, 1.00, 3.00 and 10.0 s$^{-1}$, the slope of the strain hardening index (SHI) as function of the logarithm to the basis 10 of $\dot{\varepsilon}_H$ (lg($\dot{\varepsilon}_H$)) is a characteristic measure for multi-branching. Therefore, a multi-branching index (MBI) is defined as the slope of SHI as a function of lg ($\dot{\varepsilon}_H$), i.e. the slope of a linear fitting curve of the strain hardening index (SHI) versus 1g ($\dot{\varepsilon}_H$) applying the least square method, preferably the strain hardening index (SHI) is defined at deformation rates $\dot{\varepsilon}_H$ between 0.05 s$^{-1}$ and 20.0 s$^{-1}$, more preferably between 0.10 s$^{-1}$ and 10.0 s$^{-1}$, still more preferably at the deformations rates 0.10, 0.30, 1.00, 3.00 and 10.0 s$^{-1}$. Yet more preferably the SHI-values determined by the deformations rates 0.10, 0.30, 1.00, 3.00 and 10.0 s$^{-1}$ are used for the linear fit according to the least square method when establishing the multi-branching index (MBI).

Hence, a further preferred requirement of the invention is a multi-branching index (MBI) of at least 0.15, more preferably of at least 0.20, and still more preferred of at least 0.25. In a still more preferred embodiment the multi-branching index (MBI) is at least 0.28.

It is in particular preferred that the polypropylene according to this invention has branching index g' of less than 1.00, a strain hardening index (SHI@ls$^{-1}$) of at least 0.30 and multi-branching index (MBI) of at least 0.15. Still more preferred the polypropylene according to this invention has branching index g' of less than 0.80, a strain hardening index (SHI@ls$^{-1}$) of at least 0.40 and multi-branching index (MBI) of at least 0.15. In another preferred embodiment the polypropylene according to this invention has branching index g' of less than 1.00, a strain hardening index (SHI@ls$^{-1}$) of at least 0.30 and multi-branching index (MBI) of at least 0.20. In still another preferred embodiment the polypropylene according to this invention has branching index g' of less than 1.00, a strain hardening index (SHI@ls$^{-1}$) of at least 0.40 and multi-branching index (MBI) of at least 0.20. In yet another preferred embodiment the polypropylene according to this invention has branching index g' of less than 0.80, a strain hardening index (SHI@1s$^{-1}$) of at least 0.50 and multi-branching index (MBI) of at least 0.30.

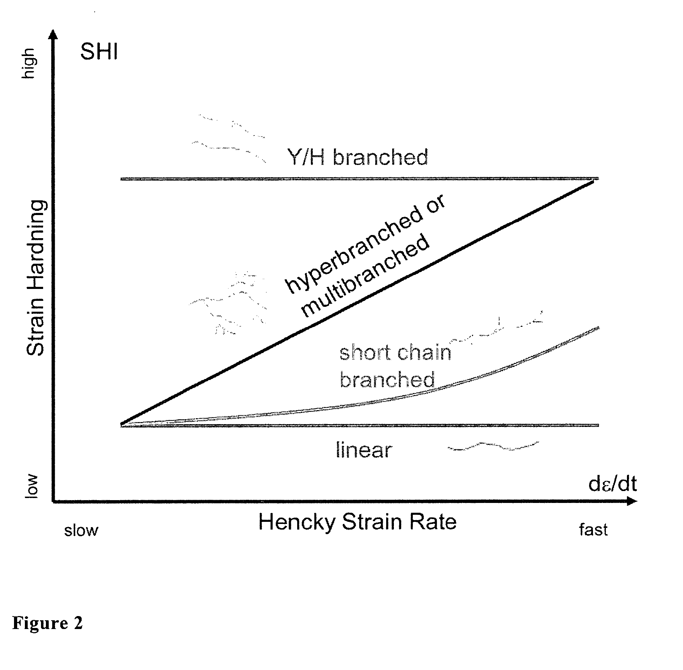

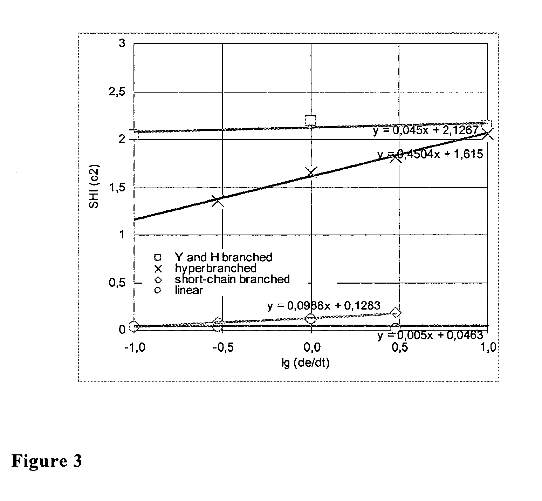

Accordingly, the polypropylenes of the present invention, i.e. multi-branched polypropylenes, are characterized by the fact that their strain hardening index (SHI) increases with the deformation rate $\dot{\varepsilon}_H$, i.e. a phenomenon which is not observed in other polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear or short chain branched polymers do not show such a relationship, i.e. the strain hardening index (SHI) is not influenced by the deformation rate (see Figures 2 and 3). Accordingly, the strain hardening index (SHI) of known polymers, in particular known polypropylenes and polyethylenes, does not increase or increases only negligible with increase of the deformation rate ($d\varepsilon/dt$). Industrial conversion processes which imply elongational flow operate at very fast extension rates. Hence the advantage of a material which shows more pronounced strain hardening (measured by the strain hardening index SHI) at high strain rates becomes obvious. The faster the material is stretched, the higher the strain hardening index (SHI) and hence the more stable the material will be in conversion. Especially in the fast extrusion process, the melt of the multi-branched polypropylenes has a high stability.

For further information concerning the measuring methods applied to obtain the relevant data for the branching index g', the tensile stress growth function $\eta_E^+$, the Hencky strain rate $\dot{\varepsilon}_H$, the Hencky strain $\varepsilon$ and the multi-branching index (MBI) it is referred to the example section.

In a second embodiment, the present invention is related to a polypropylene showing a strain rate thickening which means that the strain hardening increases with extension rates. A strain hardening index (SHI) can be determined at different strain rates. A strain hardening index (SHI) is defined as the slope of the tensile stress growth function $\eta_E^+$ as function of the Hencky strain $\varepsilon$ on a logarithmic scale between 1.00 and 3.00 at a at a temperature of 180 °C, where a SHI@0.1s$^{-1}$ is determined with a deformation rate $\dot{\varepsilon}_H$ of 0.10 s$^{-1}$, a SHI@0.3s$^{-1}$ is determined with a deformation rate $\dot{\varepsilon}_H$ of 0.30 s$^{-1}$, a SHI@3s$^{-1}$ is determined with a deformation rate $\dot{\varepsilon}_H$ of 3.00 s$^{-1}$, a SHI@10s$^{-1}$ is determined with a deformation rate $\dot{\varepsilon}_H$ of 10.0 s$^{-1}$. In comparing the strain hardening index at those five strain rates $\dot{\varepsilon}_H$ of 0.10, 0.30, 1.0, 3.0 and 10s$^{-1}$, the slope of the strain hardening index (SHI) as function of the logarithm to the basis 10 of $\dot{\varepsilon}_H$, $\lg(\dot{\varepsilon}_H)$, is a characteristic measure for multi -branching. Therefore, a multi-branching index (MBI) is defined as the slope of the strain hardening index (SHI as a function of $1g(\dot{\varepsilon}_H)$, i.e. the slope of a linear fitting curve of the strain hardening index (SHI) versus $1g(\dot{\varepsilon}_H)$ applying the least square method, preferably the strain hardening index (SHI) is defined at deformation rates $\dot{\varepsilon}_H$ between 0.05 s$^{-1}$ and 20.0 s$^{-1}$, more preferably between 0.10 s$^{-1}$ and 10.0 s$^{-1}$, still more preferably at the deformations rates 0.10, 0.30, 1.00, 3.00 and 10.0 s$^{-1}$. Yet more preferably the SHI-values determined by the deformations rates 0.10, 0.30, 1.00, 3.00 and 10.0 s$^{-1}$ are used for the linear fit according to the least square method when establishing the multi-branching index (MBI).

Hence, in the second embodiment the polypropylene has a multi-branching index (MBI) of at least 0.15.

Surprisingly, it has been found that polypropylenes with such characteristics have superior properties compared to the polypropylenes known in the art. Especially, the melt of the polypropylenes in the extrusion process has a high stability.

The new polypropylenes are characterized in particular by extensional melt flow properties. The extensional flow, or deformation that involves the stretching of a viscous material, is the dominant type of deformation in converging and squeezing flows that occur in typical polymer processing operations. Extensional melt flow measurements are particularly useful in polymer characterization because they are very sensitive to the molecular structure of the polymeric system being tested. When the true strain rate of extension, also referred to as the Hencky strain rate, is constant, simple extension is said to be a "strong flow" in the sense that it can generate a much higher degree of molecular orientation and stretching than flows in simple shear. As a consequence, extensional flows are very sensitive to crystallinity and macro-structural effects, such as long-chain branching, and as such can be far more descriptive with regard to polymer characterization than other types of bulk rheological measurement which apply shear flow.

The first requirement according to the present invention is that the polypropylene has a multi-branching index (MBI) of at least 0.15, more preferably of at least 0.20, and still more preferred of at least 0.30.

As stated above, the multi-branching index (MBI) is defined as the slope of the strain hardening index (SHI) as a function of log $(d\varepsilon/dt)$ [d SHI/d log$(d\varepsilon/dt)$].

As mentioned above, the multi-branching index (MBI) is defined as the slope of the strain hardening index (SHI) as a function of $1g$ $(d\varepsilon/dt)$ [d SHI/d lg $(d\varepsilon/dt)$].

Accordingly, the polypropylenes of the present invention, i.e. multi-branched polypropylenes, are characterized by the fact that their strain hardening index (SHI) increases with the deformation rate $\dot{\varepsilon}_H$, i.e. a phenomenon which is not observed in other polypropylenes. Single branched polymer types (so called Y polymers having a backbone with a single long side-chain and an architecture which resembles a "Y") or H-branched polymer types (two polymer chains coupled with a bridging group and a architecture which resemble an "H") as well as linear or short chain branched polymers do not show such a relationship, i.e. the strain hardening index (SHI) is not influenced by the deformation rate (see Figures 2 and 3). Accordingly, the strain hardening index (SHI) of known polymers, in particular known polypropylenes and polyethylenes, does not increase or increases only negligible with increase of the deformation rate ($d\varepsilon/dt$). Industrial conversion processes which imply elongational flow operate at very fast extension rates. Hence the advantage of a material which shows more pronounced strain hardening (measured by the strain hardening index (SHI)) at high strain rates becomes obvious. The faster the material is stretched, the higher the strain hardening index and hence the more stable the material will be in conversion. Especially in the fast extrusion process, the melt of the multi-branched polypropylenes has a high stability.

A further requirement is that the strain hardening index (SHI@1s$^{-1}$) shall be at least 0.30, more preferred of at least 0.40, still more preferred of at least 0.50.

The strain hardening index (SHI) is a measure for the strain hardening behavior of the polypropylene melt. In the present invention, the strain hardening index (SHI@1s$^{-1}$) has been measured by a deformation rate *(dε/dt)* of 1.00 s$^{-1}$ at a temperature of 180 ˚C for determining the strain hardening behavior, wherein the strain hardening index (SHI) is defined as the slope of the tensile stress growth function ηE$^{+}$ as a function of the Hencky strain ε on a logarithmic scale between 1.00 and 3.00 (see figure 1). Thereby the Hencky strain ε is defined by the formula s = $\dot{\varepsilon}_H \cdot$ t, wherein the Hencky strain rate $\dot{\varepsilon}_H$ is defined by the formula

$$\dot{\varepsilon}_H = \frac{2 \cdot \Omega \cdot R}{L_0} \ [\mathrm{s}^{-1}]$$

with
"$L_0$" is the fixed, unsupported length of the specimen sample being stretched which is equal to the centerline distance between the master and slave drums,
"R" is the radius of the equi-dimensional windup drums, and
"$\Omega$" is a constant drive shaft rotation rate.
In turn the tensile stress growth function η$E^{+}$ is defined by the formula

$$\eta_E^{+}(\varepsilon) = \frac{F(\varepsilon)}{\dot{\varepsilon}_H \cdot A(\varepsilon)}$$

with

$$T(\varepsilon) = 2 \cdot R \cdot F(\varepsilon)$$

and

$$A(\varepsilon) = A_0 \cdot \left(\frac{d_S}{d_M}\right)^{2/3} \cdot \exp(-\varepsilon)$$

wherein
the Hencky strain rate $\varepsilon_H$ is defined as for the Hencky strain ε
"F" is the tangential stretching force
"R" is the radius of the equi-dimensional windup drums
"T" is the measured torque signal, related to the tangential stretching force"F"
"A" is the instantaneous cross-sectional area of a stretched molten specimen
"$A_0$" is the cross-sectional area of the specimen in the solid state (i.e. prior to melting),
"$d_s$" is the solid state density and
"$d_M$" the melt density of the polymer.
In addition, it is preferred that the branching index g' shall be less than 1.00, more preferably less than 0.90, still more preferably less than 0.80. In the preferred embodiment, the branching index g' shall be less than 0.70. The branching index g' defines the degree of branching and correlates with the amount of branches of a polymer. The branching index g' is defined as g'=[IV]$_{br}$/[IV]$_{lin}$ in which g' is the branching index, [IV$_{br}$] is the intrinsic viscosity of the branched polypropylene and [IV]$_{lin}$ is the intrinsic viscosity of the linear polypropylene having the same weight average molecular weight (within a range of $\pm$10%) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949). This document is herewith included by reference.
The intrinsic viscosity needed for determining the branching index g' is measured according to DIN ISO 1628/1, October 1999 (in Decalin at 135 ˚C).

For further information concerning the measuring methods applied to obtain the relevant data for the a multi-branching index (MBI), , the tensile stress growth function $\eta_E^+$, the Hencky strain rate $\dot{\varepsilon}_H$, the Hencky strain $\varepsilon$ and the branching index g'it is referred to the example section.

It is in particular preferred that the polypropylene according to this invention has branching index g' of less than 1.00, a strain hardening index (SHI@1s$^{-1}$) of at least 0.30 and multi-branching index (MBI) of at least 0.15. Still more preferred the polypropylene according to this invention has branching index g' of less than 0.80, a strain hardening index (SHI@ls$^{-1}$) of at least 0.40 and multi-branching index (MBI) of at least 0.15. In another preferred embodiment the polypropylene according to this invention has branching index g' of less than 1.00, a strain hardening index (SHI@ls$^{-1}$) of at least 0.30 and multi-branching index (MBI) of at least 020. In still another preferred embodiment the polypropylene according to this invention has branching index g' of less than 1.00, a strain hardening index (SHI@ls-$^{1}$) of at least 0.40 and multi-branching index (MBI) of at least 020. In yet another preferred embodiment the polypropylene according to this invention has branching index g' of less than 0.80, a strain hardening index (SHI@1s$^{-1}$) of at least 0.50 and multi-branching index (MBI) of at least 030.

The further features mentioned below apply to both embodiment, i.e. the first and the second embodiment as defined above.

Furthermore, it is preferred that the polypropylene has a melt flow rate (MFR) given in a specific range. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg at 230 ˚C (ISO 1133) is denoted as MFR$_2$. Accordingly, it is preferred that in the present invention the polypropylene has an MFR$_2$ in a range of 0.01 to 1000.00 g/10 min, more preferably of 0.01 to 100.00 g/10 min, still more preferred of 0.05 to 50 g/10 min. In a preferred embodiment, the MFR is in a range of 1.00 to 11.00 g/10 min. In another preferred embodiment, the MFR is in a range of 3.00 to 11.00 g/10 min.

The number average molecular weight (Mn) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight (Mw) is the first moment of a plot of the weight of polymer in each molecular weight range against molecular weight.

The number average molecular weight (Mn) and the weight average molecular weight (Mw) as well as the molecular weight distribution are determined by size exclusion chromatography (SEC) using Waters Alliance GPCV 2000 instrument with online viscometer. The oven temperature is 140 ˚C. Trichlorobenzene is used as a solvent.

It is preferred that the polypropylene has a weight average molecular weight (Mw) from 10,000 to 2,000,000 g/mol, more preferably from 20,000 to 1,500,000 g/mol.

More preferably, the polypropylene according to this invention shall have a rather high pentade concentration, i.e. higher than 90 %, more preferably higher than 92 % and most preferably higher than 93 %. In another preferred embodiment the pentade concentration is higher than 95 %. The pentade concentration is an indicator for the narrowness in the regularity distribution of the polypropylene.

In addition, it is preferred that the polypropylene has a melting temperature Tm of higher than 125 ˚C. It is in particular preferred that the melting temperature is higher than 125 ˚C if the polypropylene is a polypropylene copolymer as defined below. In turn, in case the polypropylene is a polypropylene homopolymer as defined below, it is preferred, that polypropylene has a melting temperature of higher than 150 ˚C, more preferred higher than 155 ˚C.

More preferably, the polypropylene according to this invention is multimodal, even more preferred bimodal. "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight. If the polymer is produced in the sequential step process, i.e. by utilizing reactors coupled in series, and using different conditions in each reactor, the different polymer fractions produced in the different reactors each have their own molecular weight distribution which may considerably differ from one another. The molecular weight distribution curve of the resulting final polymer can be seen at a super-imposing of the molecular weight distribution curves of the polymer fraction which will, accordingly, show a more distinct maxima, or at least be distinctively broadened compared with the curves for individual fractions.

A polymer showing such molecular weight distribution curve is called bimodal or multimodal, respectively.

The polypropylene is preferably bimodal.

The polypropylene according to this invention can be homopolymer or a copolymer. Accordingly, the homopolymer as well as the copolymer can be a multimodal polymer composition.

The expression homopolymer used herein relates to a polypropylene that consists substantially, i.e. of at least 97 wt%, preferably of at least 99 wt%, and most preferably of at least 99.8 wt% of propylene units.

In case the polypropylene according to this invention is a propylene copolymer, it is preferred that the comonomer is ethylene. However, also other comonomers known in the art are suitable. Preferably, the total amount of comonomer, more preferably ethylene, in the propylene copolymer is up to 30 wt%, more preferably up to 25 wt%.

In a preferred embodiment, the polypropylene is a propylene copolymer comprising a polypropylene matrix and an ethylene-propylene rubber (EPR).

The polypropylene matrix can be a homopolymer or a copolymer, more preferably multimodal, i.e. bimodal, homopolymer or a multimodal, i.e. bimodal, copolymer. In case the polypropylene matrix is a propylene copolymer, then it is preferred that the comonomer is ethylene or butene. However, also other comonomers known in the art are suitable. The preferred amount of comonomer, more preferably ethylene, in the polypropylene matrix is up to 8.00 Mol%. In case the propylene copolymer matrix has ethylene as the comonomer component, it is in particular preferred that the amount of ethylene in the matrix is up to 8.00 Mol%, more preferably less than 6.00 Mol%. In case the propylene copolymer matrix has butene as the comonomer component, it is in particular preferred that the amount of butene in the matrix is up to 6.00 Mol%, more preferably less than 4.00 Mol%.

Preferably, the ethylene-propylene rubber (EPR) in the total propylene copolymer is up to 80 wt%. More preferably the amount of ethylene-propylene rubber (EPR) in the total propylene copolymer is in the range of 20 to 80 wt%, still more preferably in the range of 30 to 60 wt%.

In addition, it is preferred that the polypropylene being a copolymer comprising a polypropylene matrix and an ethylene-propylene rubber (EPR) has an ethylene-propylene rubber (EPR) with an ethylene-content of up to 50 wt%.

Moreover, the present invention is related to the process for producing a polymer, in particular a polypropylene as defined above, whereby the catalyst system as defined above is employed. Preferably, the process is a multi-stage process to obtain multimodal polypropylene as defined above. Furthermore it is preferred that the process temperature is higher than 60 ˚C.

Multistage processes include also bulk/gas phase reactors known as multizone gas phase reactors for producing multimodal propylene polymer.

A preferred multistage process is a "loop-gas phase"-process, such as developed by Borealis A/S, Denmark (known as BORSTAR® technology) described e.g. in patent literature, such as in EP 0 887 379 or in WO 92/12182.

Multimodal polymers can be produced according to several processes which are described, e.g. in WO 92/12182, EP 0 887 379 and WO 97/22633.

A multimodal polypropylene according to this invention is produced preferably in a multi-stage process in a multi-stage reaction sequence as described in WO 92/12182. The contents of this document are included herein by reference.

It has previously been known to produce multimodal, in particular bimodal, polypropylene in two or more reactors connected in series, i.e. in different steps (a) and (b).

According to the present invention, the main polymerization stages are preferably carried out as a combination of a bulk polymerization/gas phase polymerization.

The bulk polymerizations are preferably performed in a so-called loop reactor.

In order to produce the multimodal polypropylene according to this invention, a flexible mode is preferred. For this reason, it is preferred that the composition be produced in two main polymerization stages in combination of loop reactor/gas phase reactor.

Optionally, and preferably, the process may also comprise a prepolymerization step in a manner known in the field and which may precede the polymerization step (a).

If desired, a further elastomeric comonomer component, so called ethylene-propylene rubber (EPR) component as in this invention, may be incorporated into the obtained propylene polymer to form a propylene copolymer as defined above. The ethylene-propylene rubber (EPR) component may preferably be produced after the gas phase polymerization step (b) in a subsequent second or further gas phase polymerizations using one or more gas phase reactors.

The process is preferably a continuous process.

Preferably, in the process for producing the propylene polymer as defined above the conditions for the bulk reactor of step (a) may be as follows:

- the temperature is within the range of 40 ˚C to 110 ˚C, preferably between 60 ˚C and 100 ˚C, 70 to 90 ˚C,

- the pressure is within the range of 20 bar to 80 bar, preferably between 30 bar to 60 bar,

- hydrogen can be added for controlling the molar mass in a manner known per se.

Subsequently, the reaction mixture from the bulk (bulk) reactor (step a) is transferred to the gas phase reactor, i.e. to step (b), whereby the conditions in step (b) are preferably as follows:

- the temperature is within the range of 50 °C to 130 °C, preferably between 60 °C and 100 °C,

- the pressure is within the range of 5 bar to 50 bar, preferably between 15 bar to 35 bar,

- hydrogen can be added for controlling the molar mass in a manner known per se.

The residence time can vary in both reactor zones. In one embodiment of the process for producing the propylene polymer the residence time in bulk reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the bulk, preferably loop reactor, and/or as a condensed mode in the gas phase reactor.

The process of the invention or any embodiments thereof above enable highly feasible means for producing and further tailoring the propylene polymer composition within the invention, e.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components.

The above process enables very feasible means for obtaining the reactor-made propylene polymer as defined above.

In the following, the present invention is described by way of examples.

**Examples**

**1. Definitions/Measuring Methods**

**A Pentade Concentration**

For the pentade concentration analysis, the assignment analysis is undertaken according to T Hayashi, Pentacle concentration, R. Chujo and T. Asakura, Polymer 29 138-43 (1988) and Chujo R, et al., Polymer 35 339 (1994)

**B Multi-branching Index**

**1. Acquiring the experimental data**

Polymer is melted at T=180 °C and stretched with the SER Universal Testing Platform as described below at deformation rates of $d\varepsilon/dt = 0.10\ 0.30\ 1.00\ 3.00$ and $10.0\ s^{-1}$ in subsequent experiments. The method to acquire the raw data is described in Sentmanat et al., J. Rheol. 2005, Measuring the Transient Elongational Rheology of Polyethylene Melts Using the SER Universal Testing Platform.

**2. Evaluation**

For each of the different strain rates $d\varepsilon/dt$ applied, the resulting tensile stress growth function $\eta E^+ (d\varepsilon/dt, t)$ is plotted against the total Hencky strain $\varepsilon$ to determine the strain hardening behaviour of the melt, see Figure 1.

In the range of Hencky strains between 1.0 and 3.0, the tensile stress growth function $\eta_E^+$ can be well fitted with a function

$$\eta_E^+(\dot{\varepsilon},\varepsilon) = c_1 \cdot \varepsilon^{c_2}$$

where $c_1$ and $c_2$ are fitting variables. Such derived $c_2$ is a measure for the strain hardening behavior of the melt and called strain hardening index (SHI).

Dependent on the polymer architecture, strain hardening index (SHI) can

- Be independent of the strain rate (linear materials, Y- or H-structures)

- Increase with strain rate (short chain-, hyper- or multi-branched structures).

This is illustrated in Figure 2.

For polyethylene, linear (HDPE), short-chain branched (LLDPE) and multi-branched structures (LDPE) are well known and hence they are used to illustrate the structural analytics based on the results on extensional viscosity. They are compared with a polypropylene with Y and H-structures with regard to their change of the strain-hardening behavior as function of strain rate, see Figure 2 and Table 1.

To illustrate the determination of the strain hardening index (SHI) at different strain rates as well as the multi-branching index (MBI) four polymers of known chain architecture are examined with the analytical procedure described above, see Figure 3 and Table 2.

The first polymer is a H- and Y-shaped polypropylene homopolymer, commercially available Borealis Daploy WB130HMS. It has a MFR 230/2.16 of 2.0g/10min, a tensile modulus of 1950 MPa and a branching index g' of 0.7.

The second polymer is a commercial multi-branched LDPE, Borealis CA 7230, made in a high pressure process known in the art. It has a MFR 190/2.16 of 4.5 and a density of 923 kg/m$^3$.

The third polymer is a short chain branched LLDPE, Borealis FG 5190, made in a low pressure process known in the art. It has a MFR 190/2.16 of 1.2 and a density of 919 kg/m$^3$.

The fourth polymer is a linear HDPE, Borealis MG 7547, made in a low pressure process known in the art. It has a MFR 190/2.16 of 4.0 and a density of 954 kg/m$^3$.

The four materials of known chain architecture are investigated by means of measurement of the transient elongational viscosity at 180 °C at strain rates of 0.10, 0.30, 1.00, 3.00 and 10.0 s$^{-1}$. Obtained data (transient elongational viscosity versus Hencky strain) is fitted with a function

$$\eta_E^+ = c_1 * \varepsilon^{c_2}$$

for each of the mentioned strain rates. The parameters c1 and c2 are found through plotting the logarithm to the basis 10 of the transient elongational viscosity against the logarithm to the basis 10 of the Hencky strain and performing a linear fit of this data applying the least square method. The parameter c1 calculates from the intercept of the linear fit of the data lg ($\eta_E^+$) versus lg ($\varepsilon$) from

$$c_1 = 10^{\text{Intercept}}$$

and $C_2$ is the strain hardening index (SHI) at the particular strain rate.

This procedure is done for all five strain rates and hence, SHI@0.10 s$^{-1}$, SHI@0.3 s$^{-1}$, SHI@1.0 s$^{-1}$, SHI@3.0 s$^{-1}$, SHI@10 s$^{-1}$ are determined, see Figure 1.

Table 1: Strain Hardening Index (SHI) at different Hencky strain rates for known polymers

| de/dt | lg (de/dt) | Property | Y and H branched | multi-branched | short-chain branched | linear |
|---|---|---|---|---|---|---|
|  |  |  | WB130HMS | CA7230 | FG5190 | MG7547 |
| 0.1 | -1.0 | SHI@0.1s$^{-1}$ | 2.06 | - | 0.03 | 0.03 |
| 0.3 | -0.5 | SHI@0.3s$^{-1}$ | - | 1.36 | 0.08 | 0.03 |
| 1 | 0.0 | SHI@1.0s$^{-1}$ | 2.19 | 1.65 | 0.12 | 0.11 |
| 3 | 0.5 | SHI@3.0s$^{-1}$ | - | 1.82 | 0.18 | 0.01 |
| 10 | 1.0 | SHI@10s$^{-1}$ | 2.14 | 2.06 | - | - |

From the strain hardening behaviour measured by the values of the SHI@1 s$^{-1}$ one can already clearly distinguish between two groups of polymers: Linear and short-chain branched have a SHI@1 s$^{-1}$ significantly smaller than 0.20. In contrast, the Y and H-branched as well as multi-branched materials have a SHI@1 s$^{-1}$ significantly larger than 0.30.

In comparing the strain hardening index at those five strain rates $\varepsilon_H$ of 0.10, 0.30, 1.00, 3.00 and 10.0 s$^{-1}$, the slope of SHI as function of the logarithm to the basis 10 of $\dot{\varepsilon}_H$, 1g ($\dot{\varepsilon}_H$), is a characteristic measure for multi-branching. Therefore, a multi-branching index (MBI) is calculated from the slope of a linear fitting curve of SHI versus lg ($\dot{\varepsilon}_H$) :

$$SHI(\dot{\varepsilon}_H)=c3+MBI*\lg(\dot{\varepsilon}_H)$$

The parameters c3 and MBI are found through plotting the SHI against the logarithm to the basis 10 of the Hencky strain rate 1g ($\dot{\varepsilon}_H$) and performing a linear fit of this data applying the least square method. Please confer to Figure 2.

Table 2: Multi-branching Index (MBI) for known polymers

| Property | Y and H branched | multi-branched | short-chain branched | linear |
|---|---|---|---|---|
|  | EP 879 830 | CA 7230 | FG 5190 | MG 7547 |
| MBI | 0.04 | 0.45 | 0.10 | 0.01 |

The multi-branching index (MBI) allows now to distinguish between Y- or H-branched polymers which show a MBI smaller than 0.05 and multi-branched polymers which show a MBI larger than 0.15. Further, it allows to distinguish between short-chain branched polymers with MBI larger than 0.15 and linear materials which have a MBI smaller than 0.15.

Combining both, strain hardening index (SHI) and multi-branching index (MBI), the chain architecture can be assessed as indicated in Table 3:

Table 3: Strain Hardening Index (SHI) and Multi-branching Index (MBI) for various chain architectures

| Property | Y and H branched | Multi-branched | short-chain branched | linear |
|---|---|---|---|---|
| SHI@1.0s$^{-1}$ | ≥0.30 | ≥0.30 | <0.30 | <0.30 |
| MBI | <0.10 | ≥0.10 | ≥0.10 | <0.10 |

## 3. Examples

### Example 1 (comparison)

A silica supported metallocene catalyst (I) was prepared according to WO 01/48034 (example 27). The porosity of the support is 1.6 ml/g. An asymmetric metallocene dimethylsilyl [(2-methyl-(4'-tert.butyl)-4-phenylindenyl)(2-isopropyl-(4'-tert.butyl)-4-phenyl-indenyl)]zirkonium dichloride has been used.

A 5 liter stainless steel reactor was used for propylene polymerizations. 110 g of liquid propylene (Borealis polymerization grade) was fed to reactor. 0.2 ml triethylaluminum (100 %, purchased from Crompton) was fed as a scavenger and 3.7 mmol hydrogen (quality 6.0, supplied by Åga) as chain transfer agent. Reactor temperature was set to 30 ˚C. 21 mg catalyst was flushed into to the reactor with nitrogen overpressure. The reactor was heated up to 60 ˚C in a period of about 14 minutes. Polymerization was continued for 30 minutes at 60 ˚C, then propylene was flushed out, the polymer was dried and weighed.

Polymer yield was weighed to 182 g.

The SHI@1s-1 is 0.29. The MBI is 0.04. The g' is 1.00. This indicates linear structure. The MFR$_{230/2.16}$ is 7.9 g/10min. The melting temperature is 155 ˚C.

### Example 2 (comparison)

The catalyst (II) was prepared as described in example 5 of WO 03/051934.

A 5 liter stainless steel reactor was used for propylene polymerizations. 1100 g of liquid propylene (Borealis polymerization grade) was fed to reactor. 0.1 ml triethylaluminum (100 %, purchased from Crompton) was fed as a scavenger and 15 mmol hydrogen (quality 6.0, supplied by Aga) as chain transfer agent. Reactor temperature was set to 30 ˚C. 21 mg catalyst was flushed into to the reactor with nitrogen overpressure. The reactor was heated up to 70 ˚C in a period of about 14 minutes. Polymerization was continued for 50 minutes at 70 ˚C, then propylene was flushed out, 5 mmol hydrogen were fed and the reactor pressure was increased to 20 bars by feeding (gaseous-) propylene. Polymerization continued in gas-phase for 210 minutes, then the reactor was flashed, the polymer was dried and weighed.

Polymer yield was weighed to 790 g, that equals a productivity of 36,9 kg$_{PP}$/g$_{catalyst.}$

The SHI@1s$^{-1}$ is 0.15. The MBI is 0.12. The g' is 0.95. This indicates short-chain branched structure (SCB).

**Example 3 (inventive)**

A support-free catalyst (III) has been prepared as described in example 5 of WO 03/051934 whilst using an asymmetric metallocene dimethylsilyl [(2-methyl-(4'-tert.butyl)-4-phenyl-indenyl)(2-isopropyl-(4'-tert.butyl)-4-phenyl-indenyl)]zirkonium dichloride.

A 5 liter stainless steel reactor was used for propylene polymerizations. 1100 g of liquid propylene (Borealis polymerization grade) was fed to reactor. 0.1 ml triethylaluminum (100 %, purchased from Crompton) was fed as a scavenger and 3.7 mmol hydrogen (quality 6.0, supplied by Åga) as chain transfer agent. Reactor temperature was set to 30 °C. 20 mg catalyst were flushed into to the reactor with nitrogen overpressure. The reactor was heated up to 70 °C in a period of about 14 minutes. Polymerization was continued for 30 minutes at 70 °C, then propylene was flushed out, the polymer was dried and weighed.

Polymer yield was weighed to =390 g.

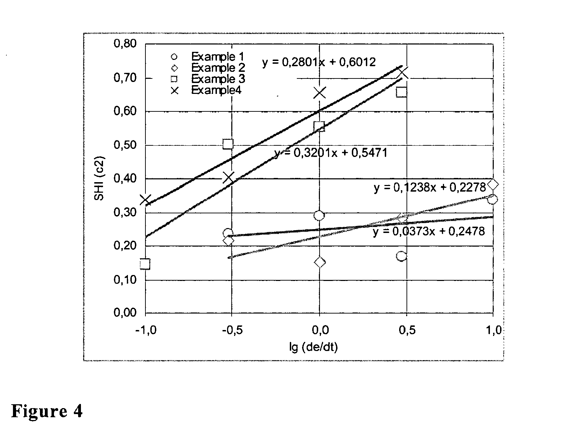

The SHI@1s$^{-1}$ is 0.55. The MBI is 0.32. The g' is 0.70. The MFR is 10.7. This indicates multi-branched structure. More data is given in Table 4 and Figure 4.

**Example 4 (inventive)**

The same catalyst (III) as that of example 3 was used.

A 5 liter stainless steel reactor was used for propylene polymerizations. 1100 g of liquid propylene + 50 g of ethylene (Borealis polymerization grade) was fed to reactor. 0.1 ml triethylaluminum (100 %, purchased from Crompton) was fed as a scavenger and 7.5 mmol hydrogen (quality 6.0, supplied by Åga) as chain transfer agent. Reactor temperature was set to 30 °C. 21 mg catalyst were flushed into to the reactor with nitrogen overpressure. The reactor was heated up to 70 °C in a period of about 14 minutes. Polymerization was continued for 30 minutes at 70 °C, then propylene was flushed out, the polymer was dried and weighed. The total ethylene content is 4.2 wt%. The melting point is 125.6 °C.

Polymer yield was weighed to 258 g.

The SHI@ls$^{-1}$ is 0.66. The MBI is 0.28. The g' is 0.70. The MFR is 8.6. This indicates multi-branched structure. More data is given in Table 4 and Figure 4.

Table 4: Tabular results

| Property | Example 1 | Example 2 | Example 3 | Example 4 |
|---|---|---|---|---|
| Catalyst | I | II | III | III |
| Porosity [ml/g] | 1.6 | Non porous | Non porous | Non porous |
| Polymer Type | Homopolymer | Homopolymer | Homopolymer | Copolymer |
| M F R$_{230/2.16}$ [g/10min] | 7.9 | 2.8 | 10.7 | 8.6 |
| g' | 1.0 | 0.95 | 0.7 | 0.7 |
| SHI@0.1 s$^{-1}$ | - | - | 0,14 | 0,34 |
| SHI@0.3s$^{-1}$ | 0.24 | 0.22 | 0.50 | 0.40 |
| SHI@1.0s$^{-1}$ | 0.29 | 0.15 | 0.55 | 0.66 |
| SHI@3.0s$^{-1}$ | 0.17 | 0.28 | 0.66 | 0.71 |
| SHI@10s$^{-1}$ | 0.34 | 0.38 | - | - |
| MBI | 0.04 | 0.12 | 0.32 | 0.28 |
| Structure | Linear | SCB | Multi-branched | Multi-branched |
| mmmm | 0.96 | 0.95 | 0.96 | - |
| Tm [°C] | 155 | 151 | 155 | 125.6 |

**Claims**

1. Catalyst system comprising an asymmetric catalyst, wherein the catalyst system has a porosity of less than 1.40 ml/g.

**2.** Catalyst system according to claim 1, wherein the asymmetric catalyst is non-silica supported catalyst as defined.

**3.** Catalyst system according to claim 1 or 2, wherein the catalyst system has a porosity below the detection limit of DIN 66135.

**4.** Catalyst system according to any one of the claims 1 to 3, wherein the catalyst system has a surface area of lower than 25 $m^2$/g measured according to ISO 9277.

**5.** Catalyst system according to any one of the preceding claims, wherein the asymmetric catalyst has at least two chemically different organic ligands.

**6.** Catalyst system according to any one of the preceding claims, wherein the asymmetric catalyst is a transition metal compound of formula (I)

$$(L)_m R_n M X_q \qquad (I)$$

wherein
M is a transition metal of group 3 to 10 or the periodic table (IUPAC), or of an actinide or lantanide,
each X is independently a monovalent anionic ligand, such as σ-ligand,
each L is independently an organic ligand which coordinates to M,
R is a bridging group linking two ligands L,
m is 2 or 3,
n is 0 or 1,
q is 1,2 or 3,
m+q is equal to the valency of the metal, and
with the proviso that at least two ligands "L" are of differnet chemical structure.

**7.** Catalyst system according to claim 6, wherein the ligand "L" is

(a) a substituted or unsubstituted cycloalkyldiene, or
(b) an acyclic, $\eta^1$- to $\eta^4$- or $\eta^6$-ligand composed of atoms from Groups 13 to 16 of the Periodic Table, or
(c) a cyclic σ-, $\eta^1$- to $\eta^4$- or $\eta^6$-, mono-, bi- or multidentate ligand composed of unsubstituted or substituted mono-, bi- or multicyclic ring systems selected from aromatic or non-aromatic or partially saturated ring systems and containing carbon ring atoms.

**8.** Catalyst system according to any one of the preceding claims,
wherein the asymmetric catalyst has a formula (II)

$$(Cp)_m R_n M X_q \qquad (II)$$

wherein
M is Zr, Hf or Ti, preferably Zr
each X is independently a monovalent anionic ligand, such as σ-ligand,
each Cp is independently an unsaturated organic cyclic ligand which coordinates to M,
R is a bridging group linking two ligands L,
m is 2,
n is 0 or 1, preferably 1
q is 1,2 or 3,
m+q is equal to the valency of the metal, and
at least one Cp-ligand is selected from the group consisting of unsubstituted cyclopenadienyl, unsubstituted indenyl, unsubstituted tetrahydroindenyl, unsubstituted fluorenyl, substituted cyclopenadienyl, substituted indenyl, substituted tetrahydroindenyl, and substituted fluorenyl,
with the proviso in case both Cp-ligands are selected from the above stated group that both Cp-ligands must chemically differ from each other.

**9.** Catalyst system according to claim 8, wherein M is Zr, X is Cl, n is 1, and q is 2.

**10.** Catalyst system according to claim 8 or 9, wherein both Cp-ligands are selected from the group consisting of substituted cyclopenadienyl-ring, substituted indenyl-ring, substituted tetrahydroindenyl-ring, and substituted fluorenyl-ring
wherein the Cp-ligands differ in the substituents bonded to the rings.

11. Catalyst system according to any one of the preceding claims,
wherein the organic ligands are substituted indenyl-rings.

12. Catalyst system according to any one of the preceding claims 9 to 11, wherein the subtituents bonded to the ring are independently selected from the group consisting of $C_1$-$C_6$ alkyl moiety, aromatic ring moiety and heteroaromatic ring moiety.

13. Catalyst system according to any one of the preceding claims 9 to 12, wherein both Cp-rings have two substituents, wherein one substituent is a substituted phenyl moiety and the other substituent is a $C_1$-$C_6$ alkyl moiety, wherein both Cp-rings preferably differ in the $C_1$-$C_6$ alkyl moiety.

14. Catalyst system according to any one of the preceding claims,
wherein the moiety "R" has the formula (III)

$$-Y(R')_2- \qquad (III)$$

wherein
Y is C, Si or Ge, and
R' is $C_1$ to $C_{20}$ alkyl, $C_6$-$C_{12}$ aryl, or $C_7$-$C_{12}$ arylalkyl.

15. Catalyst system according to claim 14, wherein Y is Si.

16. Catalyst system according to claim 14 or 15, wherein "R" is selected from the group consisting of -Si($C_1$-$C_6$ alkyl)$_2$-, - Si(phenyl)$_2$-, and -Si($C_1$-$C_6$ alkyl)(phenyl)-

17. Catalyst system according to any one of the preceding claims, wherein the asymmetric catalyst is dimethylsilyl[(2-methyl-(4'-tert. butyl)-4-phenyl-indenyl)(2-isopropyl-(4'-tert. butyl)-4-phenyl-indenyl)]zirconium dichloride.

18. Catalyst system according to any one of the preceding claims, wherein the catalyst system is obtainable, preferably is obtained, according to the process of claim 19.

19. Process for the manufacture of a catalyst according to any one of the claims 1 to 18 comprising the steps

a. preparing a solution of the asymmetric catalyst as defined as in any one of the preceding claims
b. dispersing said solution in a solvent immiscible therewith to form an emulsion in which said catalyst is present in the droplets of the dispersed phase
c. solidifying said dispersed phase to convert said droplets to solid particles and optionally recovering said particles to obtain a catalyst.

**Figures**

**Figure 1:** Determination of the SHI of WB130HMS at a strain rate of $0.1s^{-1}$ (SHI@$0.1s^{-1}$ is determined to be 2.06)

Figure 2

Figure 3

Figure 4

European Patent
Office

**EUROPEAN SEARCH REPORT**

Application Number

EP 06 00 8015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,X | WO 01/48034 A (BASELL POLYPROPYLEN GMBH; SCHOTTEK, JOERG; OBERHOFF, MARKUS; BINGEL, C) 5 July 2001 (2001-07-05)<br>* page 9 - page 35 *<br>* examples 90-93 *<br>----- | 1-18 | INV.<br>C08F4/6592<br>C08F10/00 |
| X | US 6 294 496 B1 (DIEFENBACH STEVEN P) 25 September 2001 (2001-09-25)<br>* column 2, line 52 - column 3, line 11 *<br>* claim 6 *<br>----- | 1-18 | |
| D,A | WO 03/051934 A (BOREALIS TECHNOLOGY OY; DENIFL, PETER; VAN PRAET, ERIK; BARTKE, MICHAE) 26 June 2003 (2003-06-26)<br>* page 31 - page 40 *<br>----- | 1-18 | |
| X | DATABASE CAPLUS [Online]<br>CHEMICAL ABSTRACTS SERVICE, COLUMBUS, OHIO, US;<br>MAKIO, HARUYUKI ET AL MAKIO, HARUYUKI ET AL: "Heterogeneous catalysts for olefin polymerization Heterogeneous catalysts for olefin polymerization"<br>XP002398515<br>retrieved from STN<br>Database accession no. 2001:40113<br>* abstract *<br>& JP 2001 011112 A2 (MITSUI CHEMICAL INDUSTRY CO., LTD., JAPAN MITSUI CHEMICAL INDUSTRY CO.) 16 January 2006 (2006-01-16)<br>-----<br>-/-- | 1-19 | TECHNICAL FIELDS SEARCHED (IPC)<br><br>C08F |

The present search report has been drawn up for all claims

| Place of search | Date of completion of the search | Examiner |
|---|---|---|
| The Hague | 19 April 2007 | Parry, Julian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**European Patent Office**

**EUROPEAN SEARCH REPORT**

Application Number

EP 06 00 8015

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DATABASE CAPLUS [Online] CHEMICAL ABSTRACTS SERVICE, COLUMBUS, OHIO, US; MAKIO, HARUYUKI ET AL MAKIO, HARUYUKI ET AL: "Manufacture of low-crystalline or amorphous olefin polymers with narrow molecular weight distribution Manufacture of low-crystalline or amorphous olefin polymers with narrow molecular weight distribution" XP002398516 retrieved from STN Database accession no. 1999:801618 * abstract * & JP 11 349606 A2 (MITSUI CHEMICALS INC., JAPAN MITSUI CHEMICALS INC., JAPAN) 21 December 1999 (1999-12-21) ----- | 1-19 | |

TECHNICAL FIELDS
SEARCHED (IPC)

The present search report has been drawn up for all claims

| Place of search | Date of completion of the search | Examiner |
|---|---|---|
| The Hague | 19 April 2007 | Parry, Julian |

EPO FORM 1503 03.82 (P04C01)

European Patent

Office

**Application Number**

EP 06 00 8015

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

| | | | |
|---|---|---|---|
| **European Patent** **Office** | **LACK OF UNITY OF INVENTION** **SHEET B** | **Application Number** **EP 06 00 8015** |

The Search Division considers that the present European patent application does not comply with the requirements of unity of invention and relates to several inventions or groups of inventions, namely:

```
1. claims: 1-18

              The subject-matter of claims 1-18
                 ---

2. claim: 19

              The subject matter of claim 19
                 ---
```

**EP 1 847 552 A1**

**ANNEX TO THE EUROPEAN SEARCH REPORT
ON EUROPEAN PATENT APPLICATION NO.**

EP 06 00 8015

19-04-2007

| Patent document cited in search report | | Publication date | Patent family member(s) | | Publication date |
|---|---|---|---|---|---|
| WO 0148034 | A | 05-07-2001 | AU | 782996 B2 | 15-09-2005 |
| | | | AU | 2511001 A | 09-07-2001 |
| | | | BR | 0016723 A | 18-02-2003 |
| | | | CA | 2395552 A1 | 05-07-2001 |
| | | | CN | 1433435 A | 30-07-2003 |
| | | | CN | 1590355 A | 09-03-2005 |
| | | | CN | 1590422 A | 09-03-2005 |
| | | | EP | 1250365 A2 | 23-10-2002 |
| | | | JP | 2003533550 T | 11-11-2003 |
| | | | PL | 356214 A1 | 28-06-2004 |
| | | | RU | 2276671 C2 | 20-05-2006 |
| | | | US | 2006020096 A1 | 26-01-2006 |
| | | | US | 2003149199 A1 | 07-08-2003 |
| US 6294496 | B1 | 25-09-2001 | CA | 2313244 A1 | 17-06-1999 |
| | | | DE | 69821528 D1 | 11-03-2004 |
| | | | DE | 69821528 T2 | 01-07-2004 |
| | | | EP | 1037931 A1 | 27-09-2000 |
| | | | ES | 2214750 T3 | 16-09-2004 |
| | | | JP | 2001525458 T | 11-12-2001 |
| | | | WO | 9929738 A1 | 17-06-1999 |
| | | | US | 6521728 B1 | 18-02-2003 |
| WO 03051934 | A | 26-06-2003 | AU | 2002366265 A1 | 30-06-2003 |
| | | | BR | 0214895 A | 14-12-2004 |
| | | | CA | 2468881 A1 | 26-06-2003 |
| | | | CN | 1871264 A | 29-11-2006 |
| | | | EP | 1323747 A1 | 02-07-2003 |
| | | | HU | 0402484 A2 | 29-03-2005 |
| | | | JP | 2005511866 T | 28-04-2005 |
| | | | TW | 229092 B | 11-03-2005 |
| | | | US | 2005054518 A1 | 10-03-2005 |
| JP 2001011112 | A2 | | NONE | | |
| JP 11349606 | A2 | | NONE | | |

EPO FORM P0459

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 426646 A, Fina
- WO 9837103 A
- WO 0148034 A
- WO 03051934 A
- WO 9428034 A
- EP 0887379 A
- WO 9212182 A
- WO 9722633 A

**Non-patent literature cited in the description**

- **B.H. ZIMM ; W.H. STOCKMEYER.** *J. Chem. Phys.,* 1949, vol. 17, 1301
- **R. CHUJO ; T. ASAKURA.** *Polymer,* 1988, vol. 29, 138-43
- **CHUJO R et al.** *Polymer,* 1994, vol. 35, 339
- **SENTMANAT et al.** *J. Rheol.,* 2005